# EUROPÄISCHE PATENTSCHRIFT

(11) **EP 1 149 460 B1**
(45) Veröffentlichungstag und Bekanntmachung des Hinweises auf die Patenterteilung: **10.08.2005**
(21) Anmeldenummer: 00903554.4
(22) Anmeldetag: 19.01.2000
(51) Int. Cl.: H02K 9/22, H02K 3/50

(54) **ROTIERENDE ELEKTRISCHE MASCHINE MIT PERMANENTERREGTEM ROTOR**
ROTATING ELECTRIC MACHINE COMPRISING A ROTOR THAT IS EXCITED BY PERMANENT MAGNETS
MACHINE ELECTRIQUE ROTATIVE A ROTOR EXCITE PAR AIMANTS PERMANENTS

(30) Priorität: 20.01.1999 DE 19902837
(43) Veröffentlichungstag der Anmeldung: 31.10.2001
(73) Patentinhaber: SIEMENS AKTIENGESELLSCHAFT, 80333 München (DE)
(72) Erfinder: HEIN, Peter, D-13629 Berlin (DE); HUBER, Jürgen, D-91058 Erlangen (DE); LANGE, Jürgen, D-13158 Berlin (DE); MEYER, Christian, D-13591 Berlin (DE); ROGLER, Wolfgang, D-91096 Möhrendorf (DE); SCHÜRING, Ingo, D-10715 Berlin (DE)
(86) Internationale Anmeldenummer: PCT/DE2000/000180
(87) Internationale Veröffentlichungsnummer: WO 2000/044080

(56) Entgegenhaltungen:
- FR-A- 1 364 058
- FR-A- 2 297 510
- US-A- 3 975 655
- US-A- 4 054 809

## Beschreibung

Die Erfindung liegt auf dem Gebiet der rotierenden elektrischen Maschinen und ist bei der konstruktiven Ausgestaltung solcher Motoren oder Generatoren großer Leistung anzuwenden, die einen permanenterregten Rotor aufweisen und bei denen für die Wickelköpfe der Statorwicklung besondere Maßnahmen zur Ableitung der Wärme an den Tragkörper des Stators vorgesehen sind. Derartige Motoren können als Antriebsmotoren für Schiffe Verwendung finden; als Generatoren können sie beispielsweise in Windkraftanlagen eingesetzt werden.

Ein bekannter Synchronmotor der genannten Art ist an der Unterseite eines Schiffsrumpfes in einem gondelartigen Gehäuse angeordnet. Durch formschlüssige bzw. kraftschlüssige Einspannung des Stators in das Gehäuse ist eine Kühlung des Stators und damit der Statorwicklung durch das umgebende Seewasser gewährleistet. Den Wickelköpfen der Statorwicklung können zusätzliche Kühleinrichtungen in Form eines Lüfters oder einer Sprüheinrichtung zugeordnet sein (WO 97/49 605 A). Es ist weiterhin bereits vorgeschlagen worden (WO 99/05 023 A), für die Wickelköpfe eines solchen Synchronmotors Wärmeableitungsbrücken aus einem Kunststoff wie einem Epoxidharz zu verwenden, wobei dieser Kunststoff als wärmeleitenden Füllstoff Mineralien enthält.

Auch für einen im Druckkessel eines Reaktorbehälters verwendeten Motor zum Antrieb von Steuerstäben ist die Verwendung eines Synchronmotors mit permanenterregtem Rotor bekannt, wobei für die Wickelköpfe des Rotors eine Wärmebrücke zum Statorgehäuse vorgesehen ist, die aus einer porösen Mineralfüllung besteht, welche die Wickelkopfräume ausfüllt (EP 0 523 353 A1 / DE 692 03 988 T2).

Beim Einsatz von permanenterregten Synchronmotoren für den Schiffsbetrieb und Anordnung solcher Motoren innerhalb des Schiffsrumpfes ist es üblich, die Ständerwicklung dadurch zu kühlen, daß als Ständer, d.h. als Tragkörper für die Ständerwicklung, ein Jochring verwendet wird, in dem sich von Frischwasser durchströmte Kanäle befinden. An den Enden des Jochringes angeordnete Kühlfahnen stellen eine gute Kühlung der Wickelköpfe sicher (Jahrbuch der schiffbautechnischen Gesellschaft 81 (1987), Seiten 221/222). Auch bei permanenterregten Synchronmotoren für Kraftfahrzeuge sowie bei für unterschiedliche Antriebszwecke verwendeten Motoren ist es bekannt, die Wandung des den Stator umschließenden Gehäuses mit Kühlkanälen zu versehen (DE 42 13 132 A1, FR 1 571 890 A).

Es ist weiterhin bekannt, elektrische Maschinen so auszugestalten, daß der Rotor den Stator umschließt. Bei derartigen "Außenläufer"-Maschinen sitzt der Stator auf einem rohrartigen Tragkörper auf, der im Bedarfsfall auch mit Kühlkanälen versehen werden kann (DE 12 03 373 B sowie andere Schriften in der IPC H02K 1/06).

Zur Kühlung der Wickelköpfe einer elektrischen Maschine, deren Rotor in einem Medium hoher Temperatur umläuft und deren Ständer gegen den Rotor mittels eines Spaltrohres abgeschlossen ist, ist es weiterhin bekannt, zwischen den Wickelköpfen und dem gekühlten Gehäusemantel ringförmige Wärmleiter aus Kupferguß anzuordnen, welche fingerartige, biegsame, die Wickelköpfe an den Stirnseiten in geringem Abstand umgreifende und bis in die Nähe des Luftspaltes reichende Fortsätze aufweisen, und die Wickelköpfe mit einer Einbettungsmasse zu umgeben, die aus einem elektrisch isolierendem Material mit guter Wärmeleitfähigkeit wie beispielsweise einem unlöslichen Silikonharz mit einem Füllmittel aus fein verteilter pulverförmiger Tonerde besteht (DE 12 04 316 B1). - Es ist weiterhin eine elektrische Maschine bekannt, bei der den Stator-Wickelköpfen zum Zwecke der Wärmeableitung Aluminiumringe zugeordnet sind und der Spalt zwischen den Wickelköpfen und einem Ring mit einer wärmeleitenden Füllmittelschicht, beispielsweise einem Epoxidharz, überbrückt ist (AT 151 584 A, US 3 508 092 A). - Zur Imprägnierung der Starorwicklung eines elektrischen Motors ist weiterhin bereits ein Epoxidharz verwendet worden, das durch Zusatz eines keramischen Füllstoffes eine Wärmeleitfähigkeit von 0,26 cal/m*sec*°C aufweist (DE 38 08 190 A1).

Aus der FR 1 364 058 ist eine elektrische Maschine bekannt bei der die den Wickelköpfen zugeordnete Wärmebrücken massiv ausgebildet sind und jeweils aus einem gut wärmeleitfähigen an die äußere Kontor der Wickelköpfe angepassten und mit dem Tragkörper des Stators kraftflüssig verbundenen Feststoffring aus Metall und einem in diesem Feststoffring eingegossenen und die Wickelköpfe eingebetteten Gießharzkörper bestehen.

Ausgehend von einer rotierenden elektrischen Maschine mit den Merkmalen des Oberbegriffes des Patentanspruches 1 (DE 692 03 988 T2) liegt der Erfindung die Aufgabe zugrunde, der Wärmebrücke eine möglichst große Wärmeleitfähigkeit zu verleihen.

Zur Lösung dieser Aufgabe ist gemäß der Erfindung vorgesehen, daß die den Wickelköpfen zugeordneten Wärmebrücken massiv ausgebildet sind und jeweils aus einem gut wärmeleitfähigen Feststoffring aus Metall sowie einem in diesen Feststoffring eingegossenen, einen gut wärmeleitenden Füllstoff oder eine Füllstoffmischung enthaltenden Gießharzkörper bestehen, wobei der Feststoffring aus einer Vielzahl axial gestapelter Ringscheiben aufgebaut, an die äußere Kontur der Wickelköpfe angepaßt und mit dem Tragkörper des Stators kraftschlüssig verbunden ist, die Wickelköpfe in den Gießharzkörper eingebettet sind und dieser Gießharzkörper durch Verwendung des Füllstoffes oder der Füllstoffmischung in einer Menge von 50 bis 90 Gew.-% eine thermische Leitfähigkeit größer als 1,6 W/m °K aufweist.

Die gemäß der Erfindung vorgesehene Ausgestaltung der Wärmebrücke sieht also vor, einerseits den Raum zwischen den Wickelköpfen und dem Tragkörper des Stators im wesentlichen mit einem Feststoffring zu überbrücken, der zweckmäßig aus einem Metall wie Aluminium oder Kupfer besteht, satt am Tragkörper des Stators anliegt und einen relativ kleinen, definierten Abstand zu den Wickelköpfen aufweist, und andererseits die Wickelköpfe in einen wärmeleitenden Gießharzkörper einzubetten, der seinerseits satt an dem Feststoffring anliegt. Dadurch, daß in radialer Richtung zwischen den Wickelköpfen und dem gekühlten Tragkörper keine Luftschichten vorhanden sind, die die Wärmeabfuhr beeinträchtigen könnten, ist ein optimaler Wärmeübergang von den Wickelköpfen auf den gekühlten Tragkörper des Stators gewährleistet.

Die weiterhin vorgesehene Aufteilung des Feststoffringes in einzelne Bleche dient der Verringerung von Wirbelstromverlusten. Zugleich ermöglicht eine solche Blechung eine feine Anpassung der Kontur des Feststoffringes an die äußere Kontur der Wickelköpfe, indem der Innendurchmesser der Bleche fein gestuft wird. - Die Anordnung und Ausgestaltung des Festoffringes gewährleistet, daß ausgehend von dem gekühlten Tragkörper des Stators eine relativ geringe Temperatur bis nahe an den nahen Wickelkopf herangeführt wird.

Für den Gießharzkörper der Wärmebrücke ist ein Gießharzsystem der Wärmeklasse F (Dauertemperaturbeständigkeit 155 °C) vorzusehen, welches außer einer hohen Wärmeleitfähigkeit ein gutes Temperaturwechselverhalten, hohe mechanische Festigkeit und einen niedrigen thermischen Ausdehnungskoeffizienten besitzt. Dabei sollte auch die Haftung an den Grenzflächen zwischen dem Gießharzkörper und dem Feststoffring gewährleistet sein. Als Gießharze kommen insbesondere solche auf Polyester-, Esterimid-, Silikon-, Polyurethan- und Epoxid-Basis in Betracht. Harze auf Epoxid-Basis, insbesondere säureanhydridhärtbare, haben sich aufgrund ihres ausgewogenen Eigenschaftsprofils als besonders geeignet erwiesen. Neben aromatischen Epoxidharzen von Bisphenol A und/oder Bisphenol F kommen insbesondere Harze in Betracht, die folgende Zusammensetzung aufweisen:
a) ein aromatisches und/oder heterozyklisches Polyepoxidharz, gegebenenfalls in Abmischung mit einem aliphatischen Epoxidharz,
b) ein Anhydrid und/oder ein Anhydridgemisch, insbesondere ein Carbonsäureanhydrid und/oder ein Carbonsäureanhydridgemisch, gegebenenfalls in Abmischung mit einem sauren Esther aus einem Anhydrid, und
c) ein Beschleuniger wie beispielsweise ein Aminbeschleuniger,
wobei die Komponenten a) und b) in üblicher Weise stöchiometrisch im Verhältnis 1:1 bzw. mit einem leichten Unterschuß der Komponente b) eingesetzt werden.

Ein unter Verwendung derartiger, an sich bekannter und handelsüblicher Harze hergestellter Gießharzkörper kann zur Beeinflussung der mechanischen Eigenschaften als Einlagerungskomponenten starre und/oder flexible Gewebeeinlagen enthalten. Wesentlich ist aber, daß das zu verarbeitende Gießharz einen Füllstoff enthält, der der Erhöhung der Wärmeleitfähigkeit dient und gegebenenfalls eine Erniedrigung des Ausdehnungskoeffizienten des Gießharzkörpers und eine Erhöhung der Temperaturwechselbeständigkeit bewirkt. Besonders geeignet sind anorganische Füllstoffe mit einer hohen intrinsischen thermischen Leitfähigkeit wie Aluminiumoxid, Aluminiumnitrid, insbesondere gecoatetes Aluminiumnitrid, Siliziumcarbid und Metallpulver wie insbesondere Aluminiumpulver sowie Quarzmehl und Quarzgutmehl, ferner Mischungen dieser Stoffe. Die jeweils gewählte Füllstoffkombination sollte in dem Gießharzkörper in einer Menge zwischen 50 und max. 90 Gew.%, vorzugsweise 60 bis 90 Gew.% enthalten sein. Wenn die Füllstoffkombination Quarzmehl oder Quarzgutmehl enthält, sollte dieses in einer Menge von höchstens 10 Gew.% vorhanden sein.

Die genannten Füllstoffe bzw. Füllstoffkombinationen lassen sich in die zuvor genannten Harze relativ gut einarbeiten, weil diese Harze eine relativ niedrige Viskosität aufweisen. Insbesondere die Harze auf der Basis von Polyepoxiden weisen bei einer Verarbeitungstemperatur von etwa 60 bis 90 °C, vorzugsweise bei 75 bis 85 °C, eine gute Applikation bei Temperaturen von 70 bis 100 °C, vorzugsweise bei 80 bis 90 °C auf, und zwar sowohl unter Normaldruck als auch unter Vakuum sowie unter Vakuum mit anschließender Druckbeaufschlagung. Eine gemäß der Erfindung ausgebildete Wärmebrücke weist im Bereich des Gießharzkörpers eine thermische Leitfähigkeit von mehr als 1,6 W/m°K auf, bei einem sehr hohen Füllstoffanteil sogar von mehr als 2,0 W/m°K.

Die gemäß der Erfindung ausgebildete Wärmebrücke ist mechanisch so stabil, daß auf die sonst übliche Wickelkopfversteifung verzichtet werden kann. Sofern der Gießharzkörper mit einem elektrisch isolierenden Füllstoff angereichert ist, besteht auch die Möglichkeit, bei geeigneter Wickelkonstruktion auf die sonst erforderliche wickelkopfseitige Hauptisolierung verzichten.

Gemäß der Erfindung ausgebildete Wärmebrücken kommen insbesondere bei rotierenden elektrischen Maschinen zur Anwendung, bei denen der Tragkörper ein den Stator umfassendes Gehäuse ist, wie es beispielsweise bei gondelartig anzuordnenden Schiffsantrieben oder bei im Inneren des Schiffskörpers angeordneten Antriebsmotoren der Fall ist. Die neuartige Wärmebrücke kann aber auch für rotierende elektrische Maschinen eingesetzt werden, bei denen der Tragkörper im Inneren eines von dem Rotor umgebenen Stators angeordnet ist. Ein mögliches Anwendungsgebiet sind hierbei Generatoren von Windkraftanlagen.

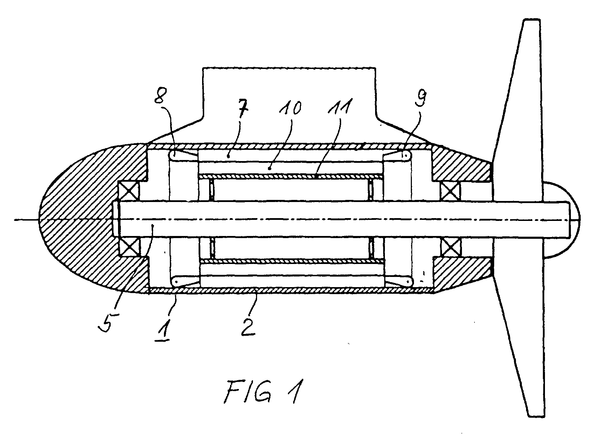

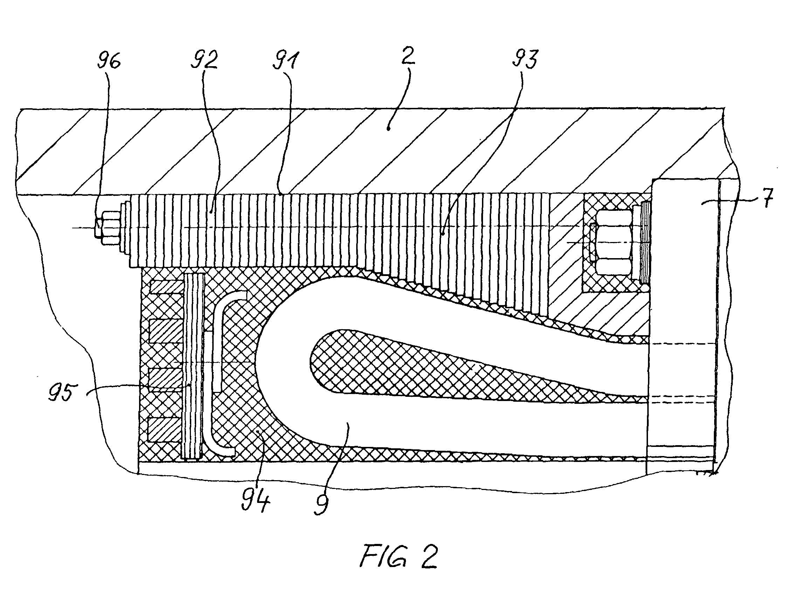

Ein Ausführungsbeispiel der neuen Wärmebrücke ist in Figur 2 dargestellt. Ein Ausführungsbeispiel einer für diese Wärmebrücke verwendeten Gießharzmasse wird anschließend beschrieben. - Die in Figur 2 dargestellte Wärmebrücke kann bei einem Antriebsmotor gemäß Figur 1 verwendet werden.

In Anlehnung an Figur 1 der WO 97/49605 zeigt die vorliegende Figur 1 eine gondelartige Antriebseinrichtung für ein Schiff, bei der in einem Gehäuse 1 ein aus Stator 7 und Läufer 10 bestehende Synchronmotor angeordnet ist. Der Stator 7 des Synchronmotors ist formschlüssig in ein hohlzylindrisches Gehäuseteil 2 eingepaßt, vorzugsweise ist dieses Gehäuseteil auf das Statorblechpaket aufgeschrumpft. Dieses Gehäuseteil bildlet den rohrförmigen Tragkörper des Stators und besteht aus einem gut wärmeleitenden Material wie beispielsweise einer Bronze-Legierung . - Die Wicklungen des Stators sind in den Wickelköpfen 8 und 9 sichtbar. Der Läufer 10 des Synchronmotors ist als permanentmagneterregter Läufer ausgebildet und ruht mittels einer Tragkonstruktion 11 auf der Antriebswelle 5.

Gemäß Figur 2 ist den beidseitigen Wickelköpfen 8 bzw. 9 jeweils eine Wärmebrücke zugeordnet, die aus einem die jeweiligen Wickelköpfe umgebenden Feststoffring 91 sowie einem darin eingegossenen Gießharzkörper 94 besteht. Diese Wärmebrücke füllt den Zwischenraum zwischen den Wickelköpfen 8 bzw. 9 und dem Tragkörper 2 vollständig aus, wobei die Wickelköpfe in den Gießharzkörper 94 eingebettet sind. In den Gießharzkörper sind noch Ringleitungen 95 für den elektrischen Anschluß der Statorwicklungen sowie Befestigungselemente wie Schnürplatten eingebettet.

Der Feststoffring 91 besteht aus einzelnen dünnen Blechen in Form von in Segmente aufgeteilten Ringscheiben, von denen die im linken Teil angeordneten Ringscheiben 92 den gleichen Innendurchmesser aufweisen, während die längs der abfallenden Kontur der Wickelköpfe 9 angeordneten Ringscheiben 93 einen kleiner werdenden Innendurchmesser aufweisen. Dadurch wird der Feststoffring an die Kontur der Wickelköpfe 9 derart angepaßt, daß ein relativ kleiner Spalt von etwa 5 mm zwischen dem Feststoffring 91 und den Wickelköpfen 9 verbleibt. - Der Feststoffring 91 ist mittels axial verlaufender Befestigungsbolzen 96 stirnseitig derart am Stator 7 befestigt, daß beim Aufschrumpfen des rohrförmigen Gehäuseteiles 2 auf den Stator 7 dieses auch auf den Feststoffring 91 aufschrumpft. Vorbereitend hierzu ist der Feststoffring - wie auch der Stator - mittels Drehmeißel auf das erforderliche Maß (Außendurchmessser) gebracht worden.

Zur Herstellung des Gießharzkörpers 91 wird innerhalb der Wickelköpfe ein hohlzylindrischer oder topfartiger Körper angeordnet, der als inneres Formteil für den Gießharzkörper 94 dient. Der Gießharzkörper 94 wird dann bei vertikal angeordnetem Stator durch Eingießen und anschließendes Aushärten einer entsprechenden Gießharzmasse hergestellt.

Ein für den dargestellten Anwendungsfall geeignetes Gießharz weist folgende Zusammensetzung auf:
a) 92 Gew.-Teile eines Epoxidharzes,
b) 75 Gew.-Teile eines Carbonsäureanhydrids,
c) 0,8 Gew.Teile eines Aminbeschleunigers,
d) 550 Gew.-Teile eines mit Siliziumdioxid gecoateten Aluminiumnitrids und
e) 29 Gew.Teile eines Quarzgutmehles.

Zur Herstellung eines Gießharzkörpers werden die genannten Komponenten zunächst bei einer Temperatur von 80°C vermischt und anschließend bei gleicher Temperatur unter einem Druck von 1 bis 10 mbar bis zur Blasenfreiheit entgast. Anschließend wird die Gießharzmasse bei einer Temperatur von 80°C vergossen und danach ausgehärtet. Die Härtung erfolgt beispielsweise für 12 h bei 80°C, anschließend 4 h bei 90°C, danach 3 h bei 100°C und abschließend 12 h bei 110°C.

Ein derart hergestellter Gießharzkörper hat eine Wärmleitfähigkeit von 1,9 W/m°K.

## Patentansprüche

1. Rotierende elektrische Maschine mit einem permanenterregten Rotor und einem mit Wicklungen versehenen Stator, dem ein rohrförmiger, gut wärmeleitender Tragkörper kraftschlüssig zugeordnet ist,
wobei der Tragkörper eine Wärmebrücke zu einem Kühlmittel bildet und auch den Wickelköpfen der Statorwicklungen jeweils eine Wärmebrücke zugeordnet ist, welche den Zwischenraum zwischen den Wickelköpfen und dem Tragkörper vollständig ausfüllt,
**dadurch gekennzeichnet, daß**
die den Wickelköpfen zugeordneten Wärmebrücken massiv ausgebildet sind und jeweils aus einem gut wärmeleitfähigen, an die äußere Kontur der Wickelköpfe (9) angepaßten und mit dem Tragkörper (2) des Stators kraftschlüssig verbundenen Feststoffring (91) aus Metall und einem in diesen Feststoffring eingegossenen und die Wickelköpfe (9) einbettenden Gießharzkörper (94) mit einer thermischen Leitfähigkeit größer als 1,6 W/m°K bestehen, wobei der Feststoffring (91) aus einer Vielzahl axial gestapelter Ringscheiben (92, 93) aufgebaut ist und der Gießharzkörper (94) einen pulverförmigen, gut wärmeleitenden Füllstoff oder eine Füllstoffmischung in einer Menge von 50 bis 90 Gew.-% enthält.

2. Rotierende elektrische Maschine nach Anspruch 1,
**dadurch gekennzeichnet, daß**
der Füllstoff bzw. eine Füllstoffkomponente aus gecoatetem Aluminiumnitrid besteht.

3. Rotierende elektrische Maschine nach Anspruch 1,
**dadurch gekennzeichnet, daß**
der Füllstoff bzw. eine Füllstoffkomponente aus einem Metallpulver wie Aluminiumpulver besteht.

4. Rotierende elektrische Maschine nach Anspruch 1,
**dadurch gekennzeichnet, daß**
der Gießharzkörper (94) zusätzlich starre und/oder flexible Gewebeeinlagen (95) enthält.

5. Rotierende elektrische Maschine nach einem der Ansprüche 2 bis 4,
**dadurch gekennzeichnet, daß**
der Gießharzkörper (94) als weiteren Füllstoff Quarzmehl in einer Menge von bis zu 10 Gew.-% enthält.

6. Rotierende elektrische Maschine nach Anspruch 1,
**dadurch gekennzeichnet, daß**
der Gießharzkörper (94) als Harz ein Epoxidharz enthält, das folgende Zusammensetzung aufweist:
a) ein aromatisches und/oder heterozyklisches Polyepoxidharz, gegebenenfalls in Abmischung mit einem aliphatischen Epoxidharz,
b) ein Anhydrid oder ein Anhydridgemisch, gegebenenfalls in Abmischung mit einem sauren Ester aus einem Anhydrid, und
c) ein Beschleuniger.

7. Rotierende elektrische Maschine nach Anspruch 1,
**dadurch gekennzeichnet, daß**
der Tragkörper (2) ein den Stator umfassendes Gehäuse ist.

8. Rotierende elektrische Maschine nach Anspruch 7,
**dadurch gekennzeichnet, daß**
das Gehäuse (2) Teil eines gondelartig anzuordnenden Schiffsantriebes ist.

9. Rotierende elektrische Maschine nach Anspruch 1,
**dadurch gekennzeichnet, daß**
der Tragkörper im Innern eines von dem Rotor umgebenen Stators angeordnet ist (Außenläufermaschine).

10. Rotierende elektrische Maschine nach Anspruch 9,
**dadurch gekennzeichnet, daß**
der Rotor und der Stator Teile eines Windkraftgenerators sind.

## Claims

1. Rotating electrical machine with a permanent-magnet rotor and a stator having windings, with which a tubular, highly thermally conductive supporting body is associated by a force fit,
the supporting body forming a thermal bridge to a cooling means and a thermal bridge being associated with each of the end windings of the stator windings, said thermal bridge completely filling the space between the end windings and the supporting body,
**characterised in that**
the thermal bridges associated with the end windings are of solid construction and each comprise a highly thermally conductive solid ring (91) made of metal, matched to the external contour of the end windings (9) and connected by a force fit to the supporting body (2) of the stator, and a cast-resin body (94) cast into said solid ring into which the end windings (9) are embedded, having a thermal conductivity greater than 1.6 W/m°K, the solid ring (91) being formed from a plurality of axially stacked annular discs (92, 93) and the cast-resin body (94) containing a powdered, highly thermally conductive filler or filler mixture in a quantity of 50 to 90% by weight.

2. Rotating electrical machine according to Claim 1, **characterised in that** the filler or one filler component comprises coated aluminium nitride.

3. Rotating electrical machine according to Claim 1, **characterised in that** the filler or one filler component comprises a metal powder, such as aluminium powder.

4. Rotating electrical machine according to Claim 1, **characterised in that** the cast-resin body (94) also contains rigid and/or flexible fabric inserts (95).

5. Rotating electrical machine according to one of Claims 2 to 4, **characterised in that** the cast-resin body (94) contains synthetic silica flour in a quantity of up to 10% by weight as an further filler.

6. Rotating electrical machine according to Claim 1, **characterised in that** the cast-resin body (94) contains a resin in the form of an epoxy resin, having the following composition:
a) an aromatic and/or heterocyclic polyepoxy resin, possibly mixed with an aliphatic epoxy resin,
b) an anhydride and/or an anhydride mixture, possibly mixed with an acid ester composed of an anhydride and
c) an accelerator.

7. Rotating electrical machine according to Claim 1, **characterised in that** the supporting body (2) is a housing surrounding the stator.

8. Rotating electrical machine according to Claim 7, **characterised in that** the housing (2) is part of a ship propulsion system to be arranged in a gondola-type fashion.

9. Rotating electrical machine according to Claim 1, **characterised in that** the supporting body is arranged within a stator surrounded by the rotor (external rotor machine).

10. Rotating electrical machine according to Claim 9, **characterised in that** the rotor and stator are parts of a wind power generator.

## Revendications

1. Machine électrique tournante comportant un rotor à excitation permanente et un stator pourvu d'enroulements, auquel une plaque-support tubulaire, bonne conductrice de la chaleur, est associée par une liaison dynamique,
dans laquelle la plaque-support forme un pont thermique avec un fluide de refroidissement, et aussi un pont thermique, qui remplit complètement l'espace intermédiaire entre les têtes de bobine et la plaque-support, est associé à chacune des têtes de bobine des enroulements statoriques,
**caractérisée en ce que** les ponts thermiques associés aux têtes de bobine ont une structure massive, et sont chacun constitués d'une bague (91), en un matériau solide, métallique, bon conducteur de la chaleur, adapté au contour extérieur des têtes de bobine (9) et relié par une liaison dynamique à la plaque-support (2) du stator, ainsi qu'à un corps (94) en résine coulée, versé dans cette bague en un matériau solide et noyé dans les têtes de bobine (9), ce corps ayant une conductivité thermique supérieure à 1,6 W/m°K, la bague (91) en un matériau solide étant constituée d'une pluralité de disques annulaires (92, 93) en empilement axial, et le corps (94) en résine coulée contenant une matière de charge en poudre, bonne conductrice de la chaleur, ou un mélange de telles matières de charge, en une quantité de 50 à 90 % en poids.

2. Machine électrique tournante selon la revendication 1, **caractérisée en ce que** la matière de charge, ou un constituant formant matière de charge, est constitué de nitrure d'aluminium enrobé.

3. Machine électrique tournante selon la revendication 1, **caractérisée en ce que** la matière de charge ou un constituant formant matière de charge est constitué d'une poudre métallique telle qu'une poudre d'aluminium.

4. Machine électrique tournante selon la revendication 1, **caractérisée en ce que** le corps (94) en résine coulée contient en outre des inserts (95) en tissus rigides et/ou souples.

5. Machine électrique tournante selon l'une des revendications 2 à 4, **caractérisée en ce que** le corps (94) en résine coulée contient en tant que matière de charge supplémentaire de la poudre de quartz en une quantité allant jusqu'à 10 % en poids.

6. Machine électrique tournante selon la revendication 1, **caractérisée en ce que** le corps (94) en résine coulée contient en tant que résine une résine époxydique ayant la composition suivante :
a) une résine polyépoxydique aromatique et/ou hétérocyclique, éventuellement en mélange avec une résine époxyde aliphatique,
b) un anhydride ou un mélange d'anhydrides, éventuellement en mélange avec un ester acide d'un anhydride, et
c) un accélérateur.

7. Machine électrique tournante selon la revendication 1, **caractérisée en ce que** la plaque-support (2) est une carcasse entourant le stator.

8. Machine électrique tournante selon la revendication 7, **caractérisée en ce que** la carcasse (2) est une partie d'un système d'entraînement de navire, destiné à être disposé sous forme d'une nacelle.

9. Machine électrique tournante selon la revendication 1, **caractérisée en ce que** la plaque-support est disposée à l'intérieur d'un stator qui entoure le rotor (machine à rotor extérieur).

10. Machine électrique tournante selon la revendication 9, **caractérisée en ce que** le rotor et le stator sont des éléments d'une génératrice éolienne.
